# DEMANDE DE BREVET EUROPEEN

(11) **EP 0 575 255 A1**
(43) Date de publication de la demande: **22.12.1993**
(21) Numéro de dépôt: 93401559.5
(22) Date de dépôt: 17.06.1993
(51) Int. Cl.: F16B 7/04, F16B 13/12, F16B 2/14

(54) **Dispositif d'assemblage d'un profile tubulaire avec une pièce de structure complémentaire**

(30) Priorité: 19.06.1992 FR 9207759
(71) Demandeur: SPM INTERNATIONAL, SA, F-31000 Toulouse (FR)
(72) Inventeur: Hureau, Patrice, F-77270 Villeparisis (FR); Le Guyader, Loic, F-92330 Sceaux (FR)
(74) Mandataire: Morelle, Guy Georges Alain

(57) **Abrégé**

Dispositif d'assemblage d'un profilé tubulaire 1 avec une pièce de structure complémentaire 2 comprenant au moins une cheville 10, 20 ayant une section extérieure complémentaire de celle du creux dudit profilé pour être apte à être insérée dans ledit profilé, et une tige de liaison 3 avec ladite pièce de structure complémentaire 2, ladite tige étant apte à être introduite dans une percée axiale 11, 21 des chevilles 10, 20.

Ce dispositif est remarquable en ce que ladite cheville 10, 20 comporte une chambre 12, 22 communiquant avec ladite percée axiale 11, 21 et renfermant un élément mobile indépendant 5 apte à coulisser dans ladite chambre sous l'effet de la poussée exercée coaxialement par la susdite tige de liaison, ledit élément mobile ayant au moins une section extérieure supérieure aux sections intérieures d'une partie au moins de ladite chambre, de telle sorte que lors de sa translation dans ladite chambre ledit élément mobile vienne comprimer une portion des parois de ladite chambre pour provoquer une expansion de la section extérieure de ladite cheville.

Ce dispositif est notamment utilisé pour l'assemblage de profilés destinés à la réalisation d'ensembles de protection ou d'appui mural du type rampes, mains courantes, barres d'appui ou analogues.

## Description

La présente invention concerne les systèmes d'assemblage de profilés pour la réalisation d'ensembles de protection ou d'appui mural du type rampes, mains courantes, barres d'appui ou analogues.

Généralement, de tels ensembles sont constitués par plusieurs tronçons de profilés qui sont solidarisés les uns aux autres par soudure ou collage ou encore associés au moyen de bagues qui sont emboîtées sur les extrémités respectives de deux tronçons disposés dans le prolongement l'un de l'autre.

Dans le cas d'une liaison par soudure ou collage, le démontage de l'ensemble, pour remplacer par exemple un élément défectueux, est particulièrement peu aisé, long et coûteux. Les systèmes de raccordement par bagues ne présentent pas généralement ce genre de défaut. Ils possèdent par contre le désavantage de nuire d'une certaine manière à l'esthétique de l'ensemble dans la mesure où les liaisons ainsi réalisées sont difficilement dissimulables à la vue.

On connaît par ailleurs, par le EP-A-0.423.990, un système d'assemblage de tubes au moyen de raccords cylindriques creux comportant une fente longitudinale de manière à permettre une expansion radiale desdits raccords lorsqu'ils sont introduits dans lesdits tubes, ceci pour qu'ils puissent venir en appui contre la paroi de ces derniers, cette expansion résultant de la présence d'un élément de liaison ayant la forme d'une tige filetée qui est insérée dans lesdits raccords.

Un tel système nécessite l'emploi d'une tige filetée dont la longueur soit relativement importante et en tout état de cause sensiblement le double de celle d'un raccord afin d'assurer un contact étroit et permanent entre la totalité de la surface des raccords associés et la paroi interne desdits tubes. Dans le cas contraire, c'est-à-dire avec une tige de liaison de longueur inférieure, on assiste à un relâchement de l'assemblage, en raison de l'apparition d'un phénomène de fluage sur la portion des raccords qui n'est pas maintenue par la tige de liaison.

Le dispositif, objet de la présente invention, permet d'éviter les inconvénients inhérents aux systèmes de l'art antérieur qui viennent d'être évoqués.

Plus précisément, l'invention a pour objet un dispositif d'assemblage d'un profilé tubulaire avec une pièce de structure complémentaire, ledit dispositif comprenant de manière conventionnelle une cheville ayant une section extérieure complémentaire de celle du creux dudit profilé pour être apte à être insérée dans ledit profilé, et une tige de liaison avec ladite pièce de structure complémentaire, ladite tige étant apte à être introduite dans une percée axiale de ladite cheville, ce dispositif étant remarquable en ce que ladite cheville comporte une chambre communiquant avec ladite percée axiale et renfermant un élément mobile indépendant apte à coulisser dans ladite chambre sous l'effet de la poussée exercée coaxialement par la susdite tige de liaison, ledit élément mobile ayant au moins une section extérieure supérieure aux sections intérieures d'une partie au moins de ladite chambre, de telle sorte que lors de sa translation dans ladite chambre ledit élément mobile vienne comprimer une portion des parois de ladite chambre pour provoquer une expansion de la section extérieure de ladite cheville.

La pièce de structure complémentaire à laquelle le profilé tubulaire est relié grâce au dispositif de l'invention, peut être un profilé tubulaire de mêmes formes et dimensions que le premier ou un élément de fixation sur un plan quelconque d'appui comme un mur, le sol ou le plafond d'un local ou d'un site quelconque à équiper.

Les autres caractéristiques et avantages de la présente invention ressortiront à la lecture de la description qui suit de divers exemples de réalisation du dispositif dont la définition vient d'être donnée, ces exemples étant fournis à titre de simple illustration et sans qu'aucune interprétation restrictive de la protection accordée au bénéficiaire de l'invention puisse en être tirée.

Cette description est accompagnée de dessins, lesquels représentent :
* à la Figure 1, une vue en perspective éclatée d'un assemblage de deux profilés tubulaires de même section ;
* à la Figure 2, une vue en coupe longitudinale d'un premier mode de réalisation de l'assemblage de la Figure 1 ;
* à la Figure 3, une vue en perspective éclatée de l'assemblage d'un profilé de la Figure 1 avec une pièce de fixation murale ;
* à la Figure 4, une vue en coupe longitudinale de l'assemblage de la Figure 3 et
* à la Figure 5, une vue en coupe longitudinale d'un second mode de réalisation d'un assemblage des deux profilés tubulaires de la Figure 1.

Sur l'ensemble des Figures, les mêmes références désignent les mêmes éléments, quelle que soit la Figure sur laquelle ces derniers apparaissent.

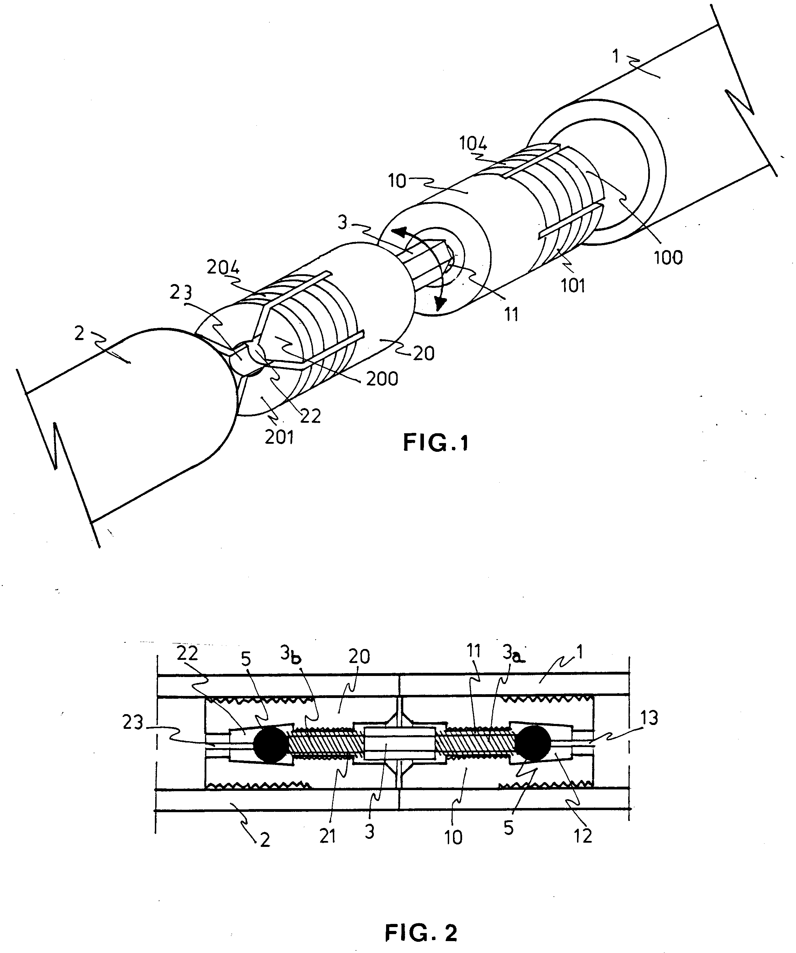

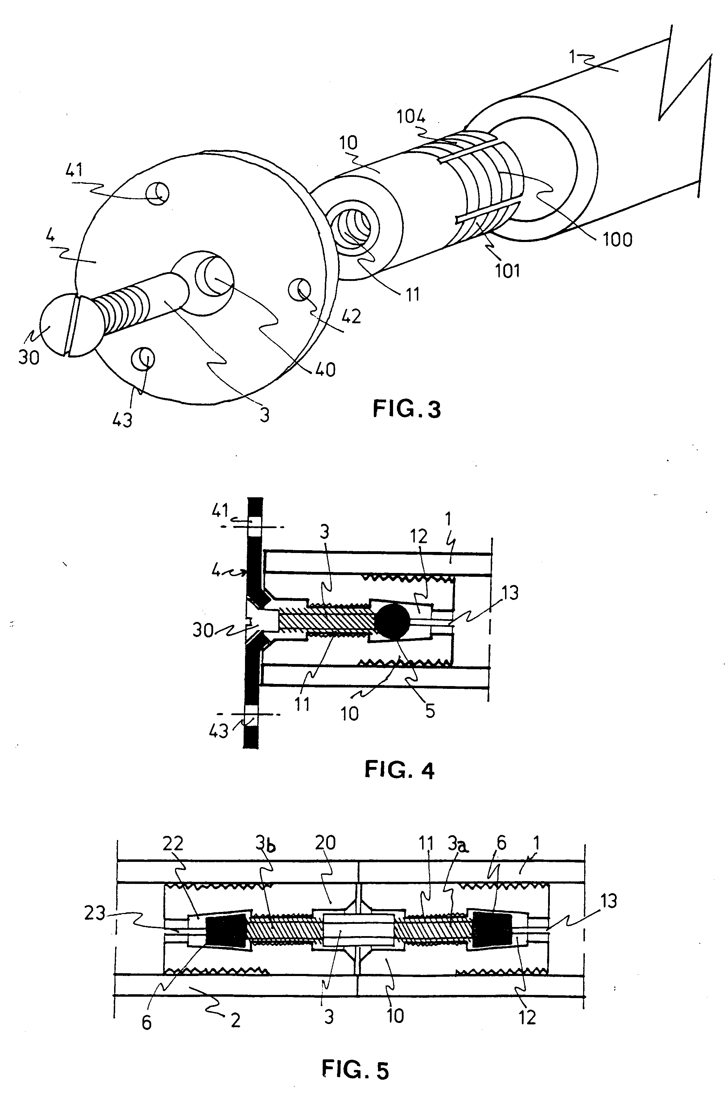

Ainsi, la Figure 1 montre deux profilés tubulaires de section circulaire, désignés respectivement par les références 1 et 2, aptes à être raccordés selon le schéma des Figures 2 ou 5.

Pour ce faire, dans chacun des profilés est emmanchée une cheville de configuration cylindrire et oblongue, respectivement 10 et 20, le diamètre desdites chevilles étant très légèrement inférieur à celui de l'ouverture desdits profilés.

Lesdites chevilles sont relièes par une tige filetée 3 dont une première extrémité 3a coopére avec la cheville 10, la seconde extrémité 3b coopérant avec la cheville 20. Chaque cheville comporte à cet effet une percée axiale, respectivement 11 et 21, de préférence taraudée, dans laquelle est introduite l'extrémité correspondante de la tige de liaison 3.

Conformément à l'invention, et comme on peut le voir plus particulièrement sur les Figures 2 et 5, chaque cheville 10 et 20 présente, au voisinage de son extrémité la plus éloignée de l'ouverture de chaque profilé, une chambre, respectivement 12 et 22, de configuration tronconique. La partie de ces chambres présentant la hauteur intérieure la plus importante est munie d'une ouverture communiquant avec les percées axiales 11 et 21 alors que la partie présentant la hauteur intérieure la plus faible est munie d'une ouverture donnant accés à des conduits 13 et 23 opposés auxdites percées axiales et débouchant vers l'intérieur de chaque profilé 1 et 2. Le rôle de ces conduits 13 et 23 sera explicité plus loin.

Dans chaque chambre, 12 et 22, est logé de manière coulissante soit une sphère 5, comme illustré à la Figure 2, soit un élément de forme conique 6, comme montré à la Figure 5.

Dans le premier cas, les sphères 5 sont simplement en contact avec les extrémités 3a et 3b de la tige de liaison 3 alors que dans le second mode de réalisation, les éléments coniques 6 sont solidaires de chaque extrémité de ladite tige.

Dans l'un et l'autre cas, ces éléments sphèriques 5 ou coniques 6, possèdent une section extérieure sensiblement inférieure à la hauteur intérieure la plus importante des chambres 12 et 22 mais supérieure à la hauteur intérieure la plus faible desdites chambres. Ainsi, lorsque ces éléments se déplacent vers les conduits 13 et 23, notamment sous l'effet de la poussée transmise par les extrémités 3a et 3b de la tige de liaison 3, ils provoquent un écartement progressif des parois de cette partie des chambres 12 et 22 de telle sorte que le tronçon des chevilles 10 et 20 où sont situées lesdites chambres, subit une expansion périmétrale. Lesdites chevilles sont alors parfaitement calées contre la paroi interne des profilés qu'elles équipent.

Afin de faciliter l'expansion du périmètre du tronçon des chevilles contenant les chambres 12 et 22, celui-ci peut être découpé, comme le montre plus particulièrement les Figures 1 et 3, en une pluralité de segments, par exemple quatre segments égaux 100...104 pour la cheville 10 ou 200...204 pour la cheville 20. Ces segments sont délimités par des fentes formées sur une partie de la longueur des chevilles et ouvertes de la surface extérieure de ces dernières à la paroi des chambres 12 et 22.

Pour réaliser une jonction des profilés avec le dispositif d'assemblage de la Figure 2, il est procédé de la manière suivante : les chevilles 10 et 20, dans les chambres 12 et 22 des-quelles les sphères 5 ont été préalablement introduites, sont tout d'abord engagées dans le profilé qui leur sert de logement respectif, on met en place ensuite la tige de liaison 3 en vissant une de ses extrémités dans la percée axiale de l'une des chevilles, par exemple l'extrémité 3a dans la percée axiale 11 de la cheville 10 qui équipe le profilé 1, on présente alors l'extrémité du second profilé 2 muni de sa cheville 20 et, par un mouvement de rotation dans l'un des sens symbolisés par la flèche à double direction de la Figure 1, par exemple dans le sens dextrorsum, on engage l'extrémité filetée 3b de la tige de liaison 3 dans la percée axiale 21 de la cheville 20 ceci jusqu'à ce que l'extrémité du profilé 2 vienne s'abouter à l'extrémité correspondante du profilé 1. Lors de cette opération d'aboutement des profilés, les extrémités 3a et 3b de la tige de liaison 3 vont pénétrer respectivement dans les chambres 12 et 22 des chevilles 10 et 20 et déplacer les sphères 5 vers les conduits 13 et 23 de manière à provoquer l'écartement des segments 100...104 et 200...204 desdites chevilles.

Pour désolidariser les deux profilés, il pourra être procédé de la manière inverse, c'est-à-dire en faisant subir une rotation dans le sens senestrorsum au profilé 2. Il suffira alors pour dégager les chevilles, d'expulser éventuellement les sphères 5 vers l'intérieur des profilés par les conduits 13 et 23.

Comme on vient de le voir, l'un des principaux avantages offerts par le dispositif d'assemblage de la Figure 2 réside dans sa facilité d'emploi. Il permet notamment de désaccoupler les profilés sans qu'il en résulte nécessairement une destruction des chevilles. En effet, si on souhaite récupérer ces dernières, on dégagera la tige de liaison 3 de manière à permettre aux sphères 5, sous l'effet de l'élasticité des parois des chambres 12 et 22, de revenir à la position illustrée à la Figure 2, au lieu de provoquer leur expulsion par les conduits 13 et 23.

On exécutera les opérations décrites précédemment pour réaliser une jonction avec le dispositif d'assemblage de la Figure 5. Dans ce cas cependant, les éléments coniques 6 étant fixés aux extrémités 3a et 3b de la tige de liaison 3, la mise en place de celle-ci dans les chevilles 10 et 20 sera accompagnée de l'enchâssement des éléments 6 dans leurs chambres respectives 12 et 22.

Les Figures 3 et 4 montrent l'assemblage du profilé 1 des Figures 1 et 2 avec une pièce qui est constituée par une platine circulaire 4 destinée à être fixée sur un mur au moyen de trois vis introduites dans des perçages 41, 42 et 43.

Le profilé 1 est muni de sa cheville 10 qui comporte une percée axiale taraudée 11 communiquant avec une chambre de configuration tronconique 12 dans laquelle est logée une sphère 5.

Dans l'assemblage illustré, la tige de liaison 3 est constituée par un boulon 3 dont une première extrémité est destinée à être introduite dans la percée axiale 11 après avoir traversé un orifice central 40 de la platine 4, et dont la seconde extrémité est munie classiquement d'une tête 30 qui est immobilisée sur les bords chanfreinés dudit orifice central 40.

La fixation du profilé 1 à un mur s'opère de la manière suivante : après mise en place de la cheville 10 dans ledit profilé, on introduit le boulon 3 dans l'orifice 40 de la platine 4 et on solidarise l'ensemble profilé-platine par vissage de telle sorte que la platine 4 vienne en étroit contact avec les bords du profilé. Lors de cette opération, et comme dans l'exemple de la Figure 2, la première extrémité du boulon 3 va pénétrer dans la chambre 12 pour déplacer la sphère 5 vers la partie la plus étroite de cette chambre afin de provoquer une ouverture des segments 100...104 de la portion de cheville enveloppant ladite chambre. On obtient de cette façon un blocage de la cheville dans le profilé, peu susceptible de se relâcher dans le temps.

Il suffit alors d'amener la platine 4 contre un mur et de l'y fixer au moyen de vis introduites dans les perçages 41, 42 et 43.

L'un des intérêts majeurs du dispositif de l'invention est qu'il évite l'emploi de chevilles ou de raccords surdimensionnés pour réaliser des assemblages fiables, comme on aura pu l'observer notamment avec le système proposé par le EP-A-0.423.990. L'existence dans le corps des chevilles d'une chambre, dont le volume peut varier suivant la position d'un élément mobile qui y est inclus, permet en effet de réduire la longueur desdites chevilles dans la mesure où il n'est plus nécessaire de disposer d'une importante surperficie de contact entre la paroi extérieure de ces dernières et la paroi interne des profilés.

## Revendications

1. Dispositif d'assemblage d'un profilé tubulaire (1) avec une pièce de structure complémentaire (2, 4), comprenant une cheville (10, 20) ayant une section extérieure complémentaire de celle du creux dudit profilé pour être apte à être insérée dans ledit profilé, et une tige de liaison (3) avec ladite pièce de structure complémentaire (2, 4), ladite tige étant apte à être introduite dans une percée axiale (11, 21) de ladite cheville, ***caractérisé en ce que*** ladite cheville (10, 20) comporte une chambre (12, 22) communiquant avec ladite percée axiale (11, 21) et renfermant un élément mobile indépendant (5, 6) apte à coulisser dans ladite chambre sous l'effet de la poussée exercée coaxialement par la susdite tige de liaison, ledit élément mobile ayant au moins une section extérieure supérieure aux sections intérieures d'une partie au moins de ladite chambre, de telle sorte que lors de sa translation dans ladite chambre ledit élément mobile vienne comprimer une portion des parois de ladite chambre pour provoquer une expansion de la section extérieure de ladite cheville.

2. Dispositif d'assemblage selon la Revendication 1, ***caractérisé en ce que*** le susdit élément mobile (5) possède une forme sphérique.

3. Dispositif d'assemblage selon la Revendication 1, ***caractérisé en ce que*** le susdit élément mobile (6) possède une forme conique.

4. Dispositif d'assemblage selon l'une quelconque des Revendications 1 à 3, ***caractérisé en ce que*** la susdite chambre (12, 22) présente une configuration interne conique.

5. Dispositif d'assemblage selon la Revendication 1 ou 4, ***caractérisé en ce*** ***que*** la susdite chambre (12, 22) est munie d'une ouverture formée par un conduit (13, 23) de ladite cheville (10, 20) opposé à ladite percée axiale (11, 21).

6. Dispositif d'assemblage selon l'une quelconque des Revendications 1 à 5, ***caractérisé en ce que*** la partie de la susdite cheville (10, 20) contenant ladite chambre (12, 22) est découpée en une pluralité de segments (100...104, 200...204).
